(19) **Europäisches Patentamt European Patent Office Office européen des brevets**

(11) **EP 2 227 772 B1**

(12) **FASCICULE DE BREVET EUROPEEN**

(45) Date de publication et mention de la délivrance du brevet:
**06.07.2011 Bulletin 2011/27**

(21) Numéro de dépôt: **08857431.4**

(22) Date de dépôt: **03.12.2008**

(51) Int Cl.:
***G06F 21/00*** *(2006.01)*

(86) Numéro de dépôt international:
**PCT/EP2008/066690**

(87) Numéro de publication internationale:
**WO 2009/071572 (11.06.2009 Gazette 2009/24)**

(54) **PROCEDE ET DISPOSITIF DE REDUCTION DE LA REMANENCE DE DONNEES STOCKEES SUR UN SUPPORT D'ENREGISTREMENT**

VERFAHREN UND EINRICHTUNG ZUR VERRINGERUNG DER REMANENZ VON AUF EINEM AUFZEICHNUNGSMEDIUM GESPEICHERTEN DATEN

METHOD AND DEVICE FOR REDUCING THE REMANENCE OF DATA STORED ON A RECORDING MEDIUM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.12.2007 FR 0708551**

(43) Date de publication de la demande:
**15.09.2010 Bulletin 2010/37**

(73) Titulaire: **THALES**
**92200 Neuilly-sur-Seine (FR)**

(72) Inventeurs:
• **ALCOUFFE, Fabien**
  **F-92700 Colombes (FR)**
• **BRETON, Sébastien**
  **F-92700 Colombes (FR)**
• **WEBER, Eric**
  **F-95830 Cormeilles en Vexin (FR)**

(56) Documents cités:
**US-A1- 2006 023 486**

• **GUTMANN P: "Secure Deletion of Data from Magnetic and Solid-State Memory" PROCEEDINGS OF THE USENIX SECURITY SYMPOSIUM, XX, 22 juillet 1996 (1996-07-22), page 14COMPLETE, XP002190890**

**EP 2 227 772 B1**

**Description**

La présente invention concerne un procédé et un dispositif de réduction de la rémanence des données stockées sur un support d'enregistrement. L'invention s'applique en particulier aux supports magnétiques tels que les disques durs, pour faciliter l'effacement complet des données inscrites sur ces supports.

Un examen approfondi des supports magnétiques usagés tels que les disques durs est aujourd'hui une source de renseignements précieux, aussi bien pour les services de police que pour l'espionnage économique. Aussi, un grand nombre de disques durs est détruit lors des renouvellements de matériel de manière à éviter la divulgation intempestive de données confidentielles.

Généralement, sur un poste informatique muni d'une mémoire réinscriptible, l'utilisateur souhaitant supprimer une première donnée ne fait que supprimer l'adresse pointant sur les blocs d'enregistrement de cette donnée. A ce stade, cette première donnée, non altérée, est donc encore présente sur la mémoire, même si les zones de mémoire accueillant ces blocs de données sont considérées comme disponibles pour accueillir une autre donnée. C'est ensuite, au cours de l'utilisation du poste, que ces zones sont susceptibles d'être utilisées de nouveau pour accueillir des blocs d'une deuxième donnée. La première donnée est alors écrasée, partiellement ou entièrement, par la deuxième donnée. Toutefois, du fait des technologies actuellement utilisées, notamment pour les disques durs, une donnée laisse des traces rémanentes même après avoir été écrasée plusieurs fois. Par exemple, pour beaucoup de disques durs, la rémanence magnétique des données est telle, que même après plusieurs dizaines d'écrasements mémoire, la donnée est encore parfois récupérable avec des moyens appropriés tels que des microscopes à balayage électronique.

Aussi, des logiciels spécifiques ont été développés pour permettre d'effacer efficacement les données. On peut notamment citer :

■ la demande de brevet de Xerox Corporation, publiée le 5 décembre 2002 sous la référence US2002181134,
■ les méthodes proposées par Peter Gutmann sur son site internet http://www.cs.auckland.ac.nz/~pqut001/pubs/secure del.html, ainsi que dans le compte-rendu du USENIX security symposium du 22 juillet 1996 intitulé "Secure deletion of data from Magnetic and Solid-State Memory
■ les méthodes préconisées par le ministère de la défense américain, notamment dans le document DoD 5220.22-M (chap 8-306), (http://www.dtic.mil/whs/directives/corres/html/522022m.htm).

Ces méthodes permettent un effacement sécurisé de données enregistrées sur un support magnétique grâce à des écritures répétées sur le support d'un motif particulier ou de données pseudo-aléatoires.

Cependant, ces méthodes de suppression *a posteriori* de la rémanence sont très longues car elles nécessitent beaucoup de cycles de réécritures. Cet inconvénient peut parfois se révéler catastrophique, par exemple lorsque l'on souhaite effacer les données confidentielles d'un système informatique en urgence lors d'une intrusion dans le système.

Il est également possible de chiffrer les données pendant l'utilisation du support, c'est-à-dire mémoriser uniquement des données cryptées. Cependant, le chiffrement reste vulnérable puisqu'il dépend d'éléments secrets susceptibles d'être compromis. De plus, compte tenu des évolutions rapides au niveau technique et algorithmique, rien ne garantit que le chiffrement ne soit pas cassé quelques années après la mise au rebut des supports d'enregistrement.

Un but de l'invention est de diminuer la rémanence des données stockées sur un support d'enregistrement. A cet effet, l'invention a pour objet un procédé de réduction de la rémanence de données stockées sur l'espace mémoire d'un support d'enregistrement, caractérisé en ce qu'au moins une partie des données stockées sur l'espace mémoire est déplacée par blocs selon un cycle répété dans le temps, le cycle comportant au moins les étapes suivantes :

■ choisir un nombre N de blocs de données à déplacer,
■ tant que le nombre de blocs déplacés D au cours du cycle est inférieur à N :

o choisir un bloc de données Bi à déplacer, de préférence parmi les N-D blocs n'ayant pas encore été déplacés,
o choisir une zone de mémoire libre,
o déplacer le bloc de données Bi sur cette zone libre.

Selon un mode de réalisation, le procédé comporte une étape supplémentaire de modification de l'état logique de la zone mémoire libérée par le déplacement du bloc de données Bi afin de réduire la rémanence des données sur ladite zone de mémoire.

La zone de mémoire libérée par le déplacement du bloc de données Bi étant généralement formée d'une série de bits, les états logiques d'au moins une partie des bits de la zone de mémoire libérée peuvent être inversés. Selon un autre mode de réalisation, un motif de données pseudo-aléatoire est écrit sur la zone de mémoire libérée.

Selon un mode de réalisation, la zone libre choisie pour accueillir le bloc de données déplacé est sélectionnée de manière pseudo-aléatoire parmi les zones libres présentes sur l'espace mémoire.

Selon un mode de réalisation, le bloc de données choisi pour être déplacé est le bloc d'indice aléatoire i parmi les N-D blocs de données à ne pas avoir encore été déplacés.

Selon un mode de réalisation, le support d'enregistrement est magnétique. Le support d'enregistrement peut être un disque dur.

L'invention a également pour objet un dispositif de réduction de la rémanence de données stockées sur l'espace mémoire d'un support d'enregistrement, le dispositif comportant une unité de calcul, le support d'enregistrement et l'unité de calcul communiquant via un bus de données, le dispositif comportant une unité de gestion de la mémoire mettant en oeuvre le procédé de réduction de la rémanence de données tel que décrit plus haut, l'unité de gestion de la mémoire maintenant une table de correspondance entre les adresses physiques des blocs de données stockés et déplacés sur l'espace mémoire du support d'enregistrement et les adresses logiques visibles des applications exécutées par l'unité de calcul.

D'autres caractéristiques apparaîtront à la lecture de la description détaillée donnée à titre d'exemple et non limitative qui suit faite en regard de dessins annexés qui représentent :

- la figure 1, une illustration de l'exécution d'un cycle du procédé de réduction de la rémanence de données selon l'invention,
- la figure 2, un mode de réalisation d'un dispositif mettant en oeuvre le procédé selon l'invention,
- la figure 3, une illustration du fonctionnement d'une unité de gestion de la mémoire mettant en oeuvre le procédé selon l'invention.

Le procédé selon l'invention repose notamment sur le constat suivant : en général, plus les données demeurent longtemps sur le même emplacement mémoire d'un support d'enregistrement, plus la rémanence de ces données est importante, autrement dit, plus les traces laissées par ces données sont profondes. En déplaçant une donnée d'un emplacement mémoire vers un autre emplacement mémoire à une fréquence suffisamment élevée, la durée durant laquelle une donnée demeure au même emplacement est réduite, et par conséquent, la rémanence de cette donnée sur le support d'enregistrement est maintenue à un faible niveau.

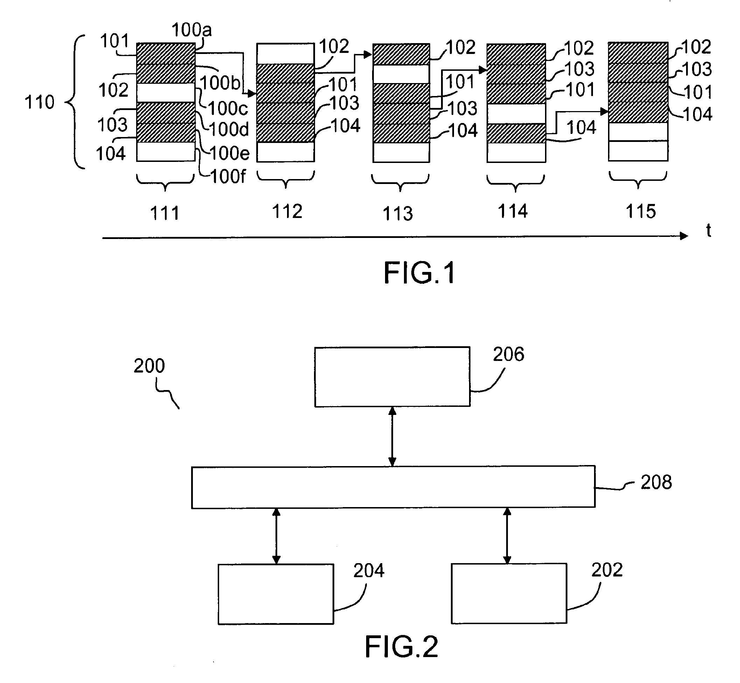

La figure 1 illustre l'exécution d'un cycle du procédé de réduction de la rémanence selon l'invention. Un même espace mémoire 110, qui couvre tout ou partie de la mémoire d'un support d'enregistrement, est représenté à différents stades de l'application du procédé. Cet espace mémoire 110, est découpé en plusieurs zones de mémoire 100a, 100b, 100c, 100d, 100e, 100f. Les zones mémoires comprenant des données sont représentées en hachuré sur la figure 1, tandis que les zones libres sont laissées vides. Pour des raisons de simplification de la description, le nombre de zones représentées sur la figure 1 est restreint à un petit nombre, mais le procédé peut être appliqué à un nombre de zones très élevé. Dans le cas d'un disque dur, une zone correspond par exemple à un bloc mémoire pointée par la table d'allocation du système de fichiers. L'espace mémoire de la figure 1 comporte six zones 100a, 100b, 100c, 100d, 100e, 100f, deux zones étant libres : la troisième zone 100c et la sixième zone 100f, tandis que les première 100a, deuxième 100b, quatrième 100d, et cinquième 100e zones sont chacune occupées par un bloc de données 101, 102, 103, 104. Le procédé selon l'invention est itératif et cyclique. Un cycle comporte plusieurs itérations et est terminé lorsque suffisamment de blocs de données, de préférence tous, ont été déplacés au moins une fois. Le nombre de blocs à déplacer au cours d'un cycle est choisi en fonction du niveau de rémanence restant sur l'espace mémoire 110 que l'on tolère pour les données. En effet, plus le nombre de blocs déplacés au cours d'un cycle est élevé, plus la rémanence moyenne des données sur l'ensemble des zones mémoires est faible.

Dans l'état initial 111 du support, aucun bloc de données n'a encore été déplacé par le procédé de réduction de la rémanence. Au cours d'un cycle, le procédé selon l'exemple de la figure 1 déplace à chaque itération le premier bloc de données à ne pas avoir été déplacé vers la première zone libre du support 100. C'est donc, dans l'exemple, le premier bloc de données 101 qui est choisi pour être déplacé vers la première zone libre, c'est à dire la troisième zone 100c. Les déplacements de blocs de données sont représentés sur la figure 1 par des flèches.

Dans le deuxième état 112 du support 100, suite au déplacement du premier bloc de données 101, la première zone 100a est libérée et la troisième zone 100c est occupée par le premier bloc de données 101. Ainsi, les deuxième 100b, troisième 100c, quatrième 100d et cinquième 100e zones sont occupées par des données et les première 100a et sixième 100f zones sont libres. Ensuite, le premier bloc de données à ne pas avoir été déplacé est choisi pour être transposé. Dans l'exemple, il s'agit du deuxième bloc de données 102 qui est déplacé vers la première zone libre, c'est à dire la première zone 100a.

Dans le troisième état 113 du support 100, suite au déplacement du deuxième bloc de données 102, la deuxième zone 100b est libérée et la première zone 100a est de nouveau occupée. Ainsi, les première 100a, troisième 100c, quatrième 100d, et cinquième 100e zones sont occupées tandis que les deuxième 100b et sixième 100f zones sont libres. A ce stade de l'exécution du procédé, le premier bloc de données à ne pas avoir été déplacé est alors le troisième bloc de données 103 occupant la quatrième zone 100d du support 100. Ce troisième bloc de données 103 est déplacé vers la première zone libre, c'est-à-dire la deuxième zone 100b du support 100.

Dans le quatrième état 114 du support 100, suite au déplacement du troisième bloc de données 103, la quatrième zone 100d est libérée et la deuxième zone 100b est occupée. Ainsi, les première 100a, deuxième 100b, troisième 100c et cinquième zones 100e sont occupées tandis que les quatrième 100d et sixième zones 100f sont libres. Ensuite, le quatrième bloc de données 104, le seul bloc de données n'ayant pas été déplacé, est transposé vers la première zone libre, c'est-à-dire la quatrième zone 100d.

Dans le cinquième état 115 du support 100, après ce dernier déplacement d'un bloc de données, 115, les quatre premières zones 100a, 100b, 100c, 100d sont occupées par des données et les cinquième 100e et sixième zones sont libres.

Un cycle du procédé est terminé lorsque tous les blocs de données de la zone ont été déplacés au moins une fois. Le cycle est alors répété à une fréquence F choisie en fonction du type de support d'enregistrement concerné, notamment en fonction de ses caractéristiques de rémanence. Par exemple, dans le cas d'un support magnétique, la fréquence F de répétition des cycles est déterminée à partir de la susceptibilité magnétique a du support 100, $\alpha$ étant définie comme suit :

$$\alpha = \lim_{B \to 0} \frac{dM}{dB}$$

où M est l'aimantation du matériau constituant le support 100, et B l'excitation magnétique qui lui est appliquée. Selon un mode de réalisation, la température à laquelle est soumis le support d'enregistrement peut également être prise en compte dans le choix de la fréquence F, la température ayant une influence sur la rémanence magnétique, selon la loi de Curie, connue de l'Homme du métier.

Dans l'exemple de la figure 1, le premier bloc non déplacé est systématiquement choisi pour être transposé vers la première zone libre de l'espace mémoire du support 100. Néanmoins, les stratégies possibles pour choisir le bloc de données à déplacer à chaque étape du procédé sont multiples, de même que les stratégies conduisant au choix de la zone libre destinée à accueillir le bloc de données déplacé. Par exemple, un choix pseudo-aléatoire est envisageable à la fois pour le bloc de données à déplacer et aussi pour la zone libre d'accueil de ce bloc. Par exemple, le bloc de données choisi pour être déplacé est le bloc de données d'indice i parmi les blocs de données n'ayant pas encore été déplacés au cours du cycle, i étant égal à un entier aléatoire compris entre 1 et N-D, N étant le nombre total de blocs de données, D étant le nombre de blocs de données ayant déjà été déplacés.

Par ailleurs, selon un mode de réalisation, seule une partie de la mémoire du support d'enregistrement est concernée par le procédé de réduction de la rémanence, la partie complémentaire de l'espace mémoire 110 étant gérée de manière classique, sans réduction de rémanence. Par exemple, si un disque dur abrite des données confidentielles sur une première partition et des données non sensibles sur une seconde partition, le procédé peut être appliqué uniquement sur la première partition.

Pour diminuer davantage la rémanence des données, le procédé peut être complété par une étape de modification de l'état des zones libérées après chaque déplacement de données. Les modifications applicables lors de cette étape peuvent prendre des formes multiples. Par exemple, l'écriture d'un motif de données peut être systématiquement effectuée sur la zone libérée par le déplacement, le motif de données utilisé pour surcharger la zone libérée pouvant être, par exemple, un bloc de données généré pseudo-aléatoirement. Il est également judicieux d'inverser l'état mémoire de la zone libérée pour diminuer la rémanence des données. A titre d'exemple, dans le cas d'un disque dur stockant les données binaires, une inversion des états logiques de chaque bit ou seulement d'une partie d'entre eux peut être effectuée sur la zone libérée après le déplacement d'un bloc de données.

La figure 2 présente un mode de réalisation d'un dispositif mettant en oeuvre le procédé selon l'invention.

Le dispositif 200 comporte une unité de gestion de la mémoire 202, noté par la suite MMU pour « Memory Management Unit », permettant à une unité de calcul 204 d'accéder à l'espace mémoire d'un support d'enregistrement 206 à travers un bus système 208. Contrairement à une MMU classique, la MMU 202 de la figure 2 met en oeuvre des mécanismes permettant d'appliquer le procédé selon l'invention.

La MMU 202 maintient une correspondance entre l'adresse physique des données stockées sur le support d'enregistrement 206, qui varie dans le temps en fonction des déplacements programmés, et l'adresse logique des données présentée au niveau des applications. La mise en oeuvre du procédé selon l'invention est totalement transparente au niveau des applications car la MMU 202 met à jour une table de correspondance en fonction des déplacements de blocs de données effectués lors d'un cycle.

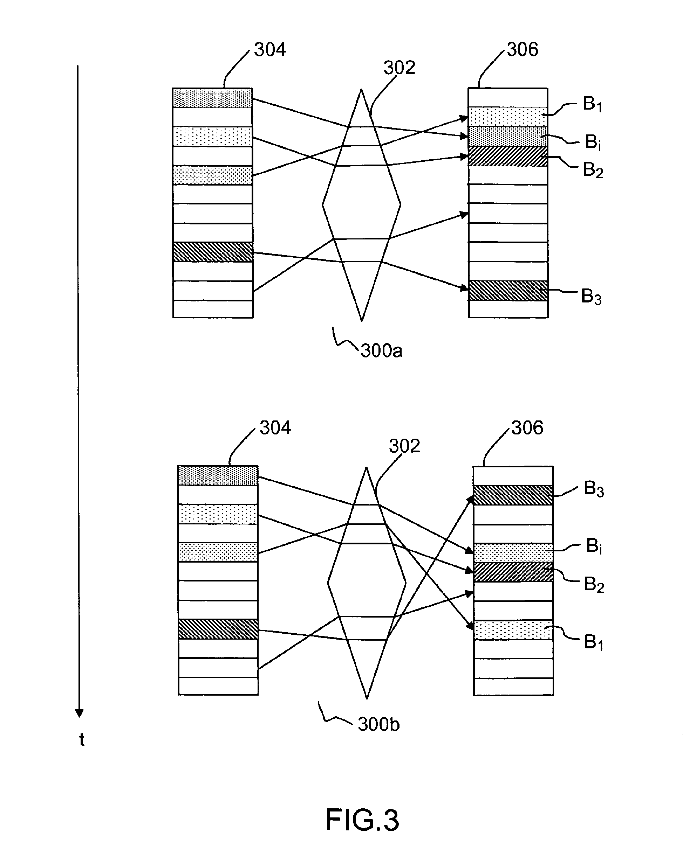

La figure 3 illustre le fonctionnement de la MMU 202 (figure 2). La MMU 202 définit une table de correspondance 302 des adresses de mémoire. Cette table de permutation 302 contient les correspondances entre les adresses de mémoire logique enregistrées dans une table d'allocation 304 et les adresses de mémoire physique pointant sur l'espace mémoire 306 du support d'enregistrement 206 (figure 2).

A l'initialisation du dispositif, la table de correspondance 302 établit des liens entre les adresses logiques @L et les adresses physiques @P des blocs de données B1, B2, B3 présents sur l'espace mémoire 306. Ces liens sont représentés par des flèches sur la figure 3.

Soit le i^ème bloc de données Bi de l'espace mémoire 306, le bloc Bi étant référencé dans la table de correspondance 302 par son adresse logique @L=100 et par son adresse physique @P=300.

Le procédé itératif de déplacement des blocs de données stockées sur l'espace mémoire 306 est exécuté par la MMU 202 (figure 2). L'itération concernant le déplacement du bloc Bi est détaillée ci-après, les itérations concernant les autres blocs B1, B2, B3 étant analogues. L'itération comporte les étapes suivantes :

- la MMU 202 calcule un nouvel emplacement physique, dans l'exemple @P=700, pour y placer le bloc Bi, accessible initialement à l'adresse physique @P=300 ;
- la MMU 202 copie le bloc Bi de l'adresse physique initiale @P=300 vers la nouvelle adresse physique @P=700 ;
- dans l'exemple, lorsque cette copie est terminée, l'intégrité des données copiées est contrôlée ;
- la référence à l'adresse physique du bloc Bi est modifiée dans la table de correspondance 302 comme suit : l'adresse physique initiale @P=300 est remplacée par la nouvelle adresse physique @P=700, tandis que la référence à l'adresse logique @L est laissée à la même valeur @L=100 ;
- dans l'exemple, l'état logique du bloc de données accessible à l'adresse physique initiale @P=300 est modifié selon l'une des méthodes précitées de diminution de la rémanence des données (par exemple, une ou plusieurs écritures d'un bloc de données prédéterminé aléatoirement ou non, ou encore une inversion binaire d'une partie des données).

Une fois l'opération du déplacement du bloc Bi étant terminée, le cycle continue pour les autres blocs de données, plus particulièrement pour ceux n'ayant pas encore été déplacés. Comme le montre la figure 3, à travers un premier état 300a et un second état 300b de l'espace mémoire 306, l'agencement des blocs de données évolue au cours du temps.

Selon un autre mode de réalisation, le procédé est exécuté à travers un pilote logiciel chargé d'ordonner des déplacements fréquents de données et d'établir des correspondances entre les adresses logiques des blocs de données et les adresses physiques de l'espace mémoire.

L'application du procédé selon l'invention permet de s'affranchir de nombreux cycles de réécriture mémoire lorsque l'on souhaite effacer définitivement les données. En effet, la rémanence de ces données est maintenue constamment faible, ce qui permet, à tout moment, de les effacer définitivement par un simple écrasement mémoire.

Le procédé selon l'invention peut notamment être utilisé dans le cadre de calculs cryptographiques, lesquels nécessitent le stockage de variables sensibles. Ces variables sensibles peuvent être avantageusement stockées sur un espace mémoire protégé par le procédé de réduction de rémanence selon l'invention afin d'éviter toute compromission de ces variables après l'exécution de ces calculs.

Le procédé selon l'invention s'applique aisément à certaines technologies telles que les supports de mémoires magnétiques comme les disques durs mais peut également concerner d'autres types de support tels que les supports optiques réinscriptibles.

**Revendications**

1. Procédé de réduction de la rémanence de données stockées sur l'espace mémoire (110) d'un support d'enregistrement (206), **caractérisé en ce qu'**au moins une partie des données stockées sur l'espace mémoire (110) est déplacée par blocs selon un cycle répété dans le temps, le cycle comportant au moins les étapes suivantes :

   ■ choisir un nombre N de blocs de données à déplacer,
   ■ tant que le nombre de blocs déplacés D au cours du cycle est inférieur à N :

      o choisir un bloc de données (Bi) à déplacer,
      o choisir une zone de mémoire libre,
      o déplacer le bloc de données (Bi) sur cette zone libre.

   ■ maintenir une table de correspondance (302) entre les adresses physiques des blocs de données stockés et déplacés sur l'espace mémoire (306) du support d'enregistrement (206) et les adresses logiques (304) visibles des applications exécutées par l'unité de calcul (204).

2. Procédé de réduction de la rémanence de données selon la revendication 1, **caractérisé en ce qu'**il comporte une étape supplémentaire de modification de l'état logique de la zone mémoire libérée par le déplacement du bloc de données Bi afin de réduire la rémanence des données sur ladite zone de mémoire.

3. Procédé de réduction de la rémanence de données selon la revendication 2, la zone de mémoire libérée par le déplacement du bloc de données Bi étant formée d'une série de bits, **caractérisé en ce que** l'étape supplémentaire de modification de l'état logique de la zone mémoire libérée comporte une inversion de l'état logique d'au moins une partie des bits de la zone de mémoire libérée.

4. Procédé de réduction de la rémanence de données selon la revendication 2, la zone de mémoire libérée par le déplacement du bloc de données Bi étant formée d'une série de bits, **caractérisé en ce qu'**un motif de données pseudo-aléatoire est écrit sur la zone de mémoire libérée.

5. Procédé de réduction de la rémanence de données selon l'une des revendications précédentes, **carac-**

**térisé en ce que** la zone libre choisie pour accueillir le bloc de données déplacé est sélectionnée de manière pseudo-aléatoire parmi les zones libres présentes sur l'espace mémoire (110).

6. Procédé de réduction de la rémanence de données selon l'une des revendications 1 à 5, **caractérisé en ce que** le bloc de données choisi pour être déplacé est le bloc d'indice aléatoire i parmi les N-D blocs de données à ne pas avoir encore été déplacés.

7. Procédé de réduction de la rémanence de données selon l'une des revendications précédentes, **caractérisé en ce que** le support d'enregistrement (206) est magnétique.

8. Procédé de réduction de la rémanence de données selon la revendication 7, **caractérisé en ce que** le support d'enregistrement (206) est un disque dur.

9. Dispositif de réduction de la rémanence de données stockées sur l'espace mémoire (306) d'un support d'enregistrement (206), le dispositif comportant une unité de calcul (204), le support d'enregistrement (206) et l'unité de calcul (204) communiquant via un bus de données (208), **caractérisé en ce qu'**il comporte une unité de gestion de la mémoire (202) mettant en oeuvre le procédé selon l'une des revendications précédentes,

**Claims**

1. Method of reducing the remanence of data stored in the memory space (110) of a recording medium (206), **characterized in that** at least a portion of the data stored in the memory space (110) is moved in blocks according to a cycle repeated over time, the cycle comprising at least the following steps:

   ■ a number N of data blocks to be moved is chosen;
   ■ as long as the number D of blocks moved during the cycle is less than N:

   o a data block ($B_i$) to be moved is chosen;
   o a free memory area is chosen;
   o the data block ($B_i$) is moved to this free area; and

   ■ a look-up table (302) is maintained that maps the physical addresses of the data blocks stored and moved in the memory space (306) of the recording medium (206) to the visible logic addresses (304) of the applications executed by the computer unit (204).

2. Method of reducing data remanence according to Claim 1, **characterized in that** it includes an additional step of modifying the logic state of the area freed by the movement of the data blook $B_i$ so as to reduce the remanence of the data in said memory area.

3. Method of reducing data remanence according to Claim 2, in which the memory area freed by the movement of the data block $B_i$ is formed from a series of bits, **characterized in that** the additional step of modifying the logic state of the freed memory area comprises a reversal of the logic state of at least some of the bits of the freed memory area.

4. Method of reducing data remanence according to Claim 2, the memory area freed by the movement of the data block $B_i$ being formed from a series of bits, **characterized in that** a pseudo random data pattern is written into the freed memory area.

5. Method of reducing data remanence according to one of the preceding claims, **characterized in that** the free area chosen to receive the moved data block is selected pseudo randomly from among the free areas present in the memory space (110).

6. Method of reducing data remanence according to one of Claims 1 to 5, **characterized in that** the data block chosen to be moved is the block of random index i among the N-D data blocks having not yet been moved.

7. Method of reducing data remanence according to one of the preceding claims, **characterized in that** the recording medium (206) is a magnetic medium.

8. Method of reducing data remanence according to Claim 7, **characterized in that** the recording medium (206) is a hard disk.

9. Device for reducing the remanence of data stored in the memory space (306) of a recording medium (206), the device comprising a computer unit (204), the recording medium (206) and the computer unit (204) communicating via a data bus (208), **characterized in that** it includes a memory management unit (202) implementing the method as claimed in one of the preceding claims.

**Patentansprüche**

1. Verfahren zum Reduzieren der Remanenz von Daten, die im Speicherraum (110) eines Aufzeichnungsträgers (206) gespeichert sind, **dadurch gekennzeichnet, dass** wenigstens ein Teil der in dem Speicherraum (110) gespeicherten Daten blockweise in einem zeitlich wiederholten Zyklus verlagert wird, wobei der Zyklus wenigstens die folgenden Schritte enthält:

■ Wählen einer Anzahl N von zu verlagernden Datenblöcken,
■ solange die Anzahl D von während des Zyklus verlagerten Blöcken kleiner als N ist:

■ Wählen eines zu verlagernden Datenblocks (Bi),
■ Wählen einer freien Speicherzone,
■ Verlagern des Datenblocks (Bi) in diese freie Zone,

■ Haltern einer Korrespondenztabelle (302) zwischen den physikalischen Adressen der Datenblöcke, die in dem Speicherraum (306) des Aufzeichnungsträgers (206) gespeichert und dorthin verlagert sind, und den sichtbaren logischen Adressen (304) der von Recheneinheit (204) ausgeführten Anwendungen.

2. Verfahren zum Reduzieren der Remanenz von Daten nach Anspruch 1, **dadurch gekennzeichnet, dass** es einen zusätzlichen Schritt des Modifizierens des logische zustands der durch die Verlagerung des Datenblocks Bi freigegebenen Speicherzone enthält, um die Remanenz der Daten in dieser Speicherzone zu reduzieren.

3. Verfahren zum Reduzieren der Remanenz von Daten nach Anspruch 2, wobei die durch die Verlagerung des Datenblocks Bi freigegebene Speicherzone durch eine Reihe von Bit gebildet ist, **dadurch gekennzeichnet, dass** der zusätzliche Schritt des Modifizierens des logischen Zustands der freigegebenen Speicherzone eine Umkehrung des logischen Zustands wenigstens eines Teils der Bit der freigegebenen Speicherzone enthält.

4. Verfahren zum Reduzieren der Remanenz von Daten nach Anspruch 2, wobei die durch die Verlägerung des Datenblocks Bi freigegebene Speicherzone aus einer Reihe von Bit gebildet ist, **dadurch gekennzeichnet, dass** ein pseudozufälliges Datenmuster in die freigegebene Speicherzone geschrieben wird.

5. Verfahren zum Reduzieren der Remanenz von Daten nach einem der vorhergehenden Ansprüche, **dadurch gekennzeichnet, dass** die freie Zone, die für die Aufnahme des verlagerten Datenblocks gewählt wird, pseudozufällig unter den freien Zonen, die in dem Speicherraum (110) vorhanden sind, ausgewählt wird.

6. Verfahren zum Reduzieren der Remanenz von Daten nach einem der Ansprüche 1 bis 5, **dadurch ge-** kennzeichnet, dass der für die Verlagerung gewählte Datenblock ein Block mit zufälligem Index i unter den N-D Datenblöcken, die nicht verlagert sind, ist.

7. Verfahren zum Reduzieren der Remanenz von Daten nach einem der vorhergehenden Ansprüche, **dadurch gekennzeichnet, dass** der Aufzeichnungsträger (206) magnetisch ist.

8. Verfahren zum Reduzieren der Remanenz von Daten nach Anspruch 7, **dadurch gekennzeichnet, dass** der Aufzeichnungsträger (206) eine Festplatte ist.

9. Vorrichtung zum Reduzieren der Remanenz von Daten, die im Speicherraum (306) eines Aufzeichnungsträgers (206) gespeichert sind, wobei die Vorrichtung eine Recheneinheit (204) enthält, wobei der Aufzeichnungsträger (206) und die Recheneinheit (204) über einen Datenbus (208) kommunizieren, **dadurch gekennzeichnet, dass** sie eine Steuereinheit für den Speicher (202) enthält, die das Verfahren nach einem der vorhergehenden Ansprüche ausführt.

FIG.1

FIG.2

EP 2 227 772 B1

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002181134 A

**Littérature non-brevet citée dans la description**

- Secure deletion of data from Magnetic and Sol-id-State Memory. *USENIX security symposium,* 22 Juillet 1996